# EUROPÄISCHE PATENTSCHRIFT

(11) **EP 1 536 945 B1**
(45) Veröffentlichungstag und Bekanntmachung des Hinweises auf die Patenterteilung: **04.11.2009**
(21) Anmeldenummer: 03795025.0
(22) Anmeldetag: 26.08.2003
(51) Int. Cl.: B32B 3/24, B32B 5/24, B29C 53/06, B32B 38/04, B60R 13/02

(54) **FLÄCHENGEBILDE ZUR AUSKLEIDUNG VON TEILBEREICHEN EINES KRAFTFAHRZEUG-INNENRAUMES**
PLANAR STRUCTURE FOR TRIMMING PARTIAL AREAS OF A MOTOR VEHICLE INTERIOR
STRUCTURE DE SURFACE POUR GARNIR DES ZONES PARTIELLES DE L'HABITACLE D'UN VEHICULE

(30) Priorität: 26.08.2002 DE 10239035
(43) Veröffentlichungstag der Anmeldung: 08.06.2005
(73) Patentinhaber: Trocellen GmbH, 53840 Troisdorf (DE)
(72) Erfinder: ROEGER, Ingo, 53757 St. Augustin (DE)
(74) Vertreter: HT-Patentabteilung
(86) Internationale Anmeldenummer: PCT/EP2003/050602
(87) Internationale Veröffentlichungsnummer: WO 2004/024435

(56) Entgegenhaltungen:
- GB-A- 1 035 753
- US-A- 3 627 608
- US-A- 3 867 240
- US-A- 4 211 590
- US-A1- 2001 018 112

## Beschreibung

Die Erfindung betrifft ein Flächengebilde zur Auskleidung von Teilbereichen eines Kraftfahrzeug-Innenraumes mit dreidimensional gestalteter Oberflächenkontur, umfassend eine Schicht aus Polyolefinschaumstoff und eine Schicht aus einem textilen Flächengebilde, sowie ein Verfahren zur Auskleidung von Teilbereichen eines Kraftfahrzeug-Innenraumes mit einem solchen Flächengebilde.

### Technisches Gebiet

Teilbereiche von Kraftfahrzeug-Innenräumen mit dreidimensional gestalteter Oberflächenkontur wie Fußbereiche, Seitenbereiche, Radhäuser, Kofferraumseiten, Trittschutz unter Sitzbänken etc., werden in der Regel - insbesondere aus optischen und schallschutztechnischen Gründen - mit speziellen Formteilen verkleidet. Diese Formteile weisen eine gewisse Eigensteifigkeit und eine Kontur auf, die der dreidimensional gestalteten Oberflächenkontur des zu verkleidenden Innenraum-Bereichs angepasst ist. Die Befestigung erfolgt häufig über Klipse, mit Hilfe von Laschen oder durch Verkleben.

### Stand der Technik

Aus der DE 25 04 691 B1 ist eine gattungsgemäße Auskleidung in Form einer Kofferraum- oder Bodenmatte für Kraftfahrzeuge oder andere Transportmittel bekannt, die aus einer Schicht aus geschlossenzelligem Polyethylenschaumstoff und einer hiermit verbundenen Kaschierung besteht. Zur Herstellung der Kofferraum- bzw. Bodenmatte wird ein ebener Abschnitt eines zweischichtigen Laminates bis in den thermoplastischen Bereich erwärmt und in diesem Zustand so verformt, dass seine Form der zu verkleidenden Oberflächenkontur weitgehend entspricht.

Die so hergestellten Verkleidungsteile weisen zwar eine gute Dimensionsstabilität und gute Gebrauchseigenschaften auf, jedoch sind für dieses Verfahren relativ hohe Werkzeuginvestitionen notwendig, die die Herstellung insbesondere bei kleineren Serien verteuern.

### Aufgabe

Aufgabe der vorliegenden Erfindung ist es daher, ein gattungsgemäßes Flächengebilde bzw. ein Verfahren zur Auskleidung von Teilbereichen eines Kraftfahrzeug-Innenraumes mit dreidimensional gestalteter Oberflächenkontur zur Verfügung zu stellen, dass diese Nachteile nicht aufweist.

### Darstellung der Erfindung

Die Erfindung löst diese Aufgabe durch ein Flächengebilde gemäß Anspruch 1, bevorzugt in Kombination mit einem oder mehreren der Merkmale der Unteransprüche, bzw. durch ein Verfahren gemäß Anspruch 8, bevorzugt in Kombination mit einem oder mehreren hiervon abhängigen Ansprüchen.

Das erfindungsgemäße Flächengebilde umfasst wenigstens eine Schicht aus einem Polyolefinschaumstoff, bevorzugt einem vernetzten, geschlossenzelligem Polyethylenschaumstoff, und eine Schicht aus einem textilen Flächengebilde. Diese beiden Schichten können direkt durch z. B. Flammkaschierung miteinander verbunden sein, ggf. aber auch mittels einer Kleberschicht o. dgl. Es liegt dabei innerhalb des Rahmens dieser Erfindung, wenn zusätzliche weitere Schichten vorhanden sind.

Der Polyolefinschaumstoff ist bevorzugt vernetzt, insbesondere chemisch vernetzt, und bevorzugt geschlossenzellig. Als Material eignet sich insbesondere Polyethylen oder übliche Mischungen von Polyethylen mit anderen Polyolefinen, insbesondere Ethylencopolymeren. Die Dichte beträgt bevorzugt 30 bis 250 kg/m³, besonders bevorzugt 80 bis 130 kg/m³

Als textiles Flächengebilde eignen sich insbesondere Faservliese, es können jedoch auch andere flächenförmige textile Faserstoffe wie Filze, Gewebe, Gewirke, Geflechte, Nadelflortextilien, Teppichmaterialien o. dgl. verwendet werden. Bevorzugt wird ein Nadelvlies aus Polyolefinfasern oder -fäden, insbesondere mit einem Flächengewicht von 150 bis 350 g/m², besonders bevorzugt 180 bis 250 g/m².

Die Kombination aus einem Polyolefinschaumstoff und einem textilen Flächengebilde weist einerseits eine ausreichende Eigensteifigkeit des Verbundes, andererseits eine gute Biegsamkeit auf, die notwendig ist, um das zunächst ebene Flächengebilde elastisch zu einem Formteil verarbeiten zu können.

Das erfindungsgemäße Flächengebilde ist vor dem Einbringen in den Kraftfahrzeug-Innenbereich zunächst flach und eben und weist eine Gesamtstärke von ca. 3 bis 8 mm auf. Zur räumlichen Anpassung an die dreidimensional gestaltete Oberflächenkontur des Kraftfahrzeug-Innenraumes weist das Flächengebilde linienförmig angeordnete Durchbrechungen auf. Entlang dieser Durchbrechungen kann das Flächengebilde geknickt bzw. gefaltet werden. Durch entsprechend angeordnete Knick- bzw. Faltlinien in Form von Lochungen, Nadelungen und/oder Stanzungen kann die Geometrie des Flächengebildes an die gewünschte Form angepasst werden.

Besonders bevorzugt werden die Nadelungen bzw. Stanzungen in Abhängigkeit davon vorgenommen, ob die Knickung bzw. Faltung - jeweils von der textilen Oberflächenseite her gesehen - zu einem Formkörper mit Außenkante, also mit einer positiven Knickung - Winkelgröße > 180°- oder zu einer Innenkante bzw. negative Faltung mit einem Winkel < 180° erfolgt. Bei Knickungen > 180°, also einer positiven Knickung, werden Stanzungen in Form von nebeneinanderliegenden punktförmigen Lochungen bzw. Nadelungen bevorzugt, während bei einer Knickung - von der textilen Beschichtung her gesehen - zu einer Innenkante, Winkel < 180°, Stanzungen in Form von nebeneinanderliegenden länglichen Stanzungen ausgeführt. Bei einer positiven Knickung sieht man die Nadelungen nicht, während längliche Stanzungen zu einem Aufklaffen der Knicklinie in den durchstanzten Bereichen führen würden, was die Optik negativ beeinträchtigen würde.

Zur Herstellung des erfindungsgemäßen Flächengebildes wird bevorzugt zunächst eine endlose Bahn aus z. B. Polyethylenschaumstoff mit einem Nadelvlies durch Flammkaschierung verbunden. Durch Stanzen werden aus dieser Bahn Zuschnitte hergestellt, die in ihrer Außenkontur der Abwicklung des zu verkleidenden Bereiches des Kraftfahrzeug-Innenraumes entsprechen.

Mit dem Stanzen der Außenkontur der erfindungsgemäßen Flächengebilde können zugleich die linienförmig angeordneten Durchbrechungen eingestanzt werden. Ein besonderer Vorteil liegt darin, dass mehrere Zuschnitte übereinander durch eine einzige Stanzung erzeugt werden können, in der Praxis zwischen zwei und fünf Zuschnitte durch eine Stanzung. Bei der Stanzung werden dabei die 2 bis 5 Zuschnitte des zweischichtigen Halbzeuges mit der textilen Oberfläche und dem Polyolefinschaumstoff als Trägermaterial vollständig von den Stanzzungen bzw. -nadeln penetriert. Die so erzeugten Durchbrechungen sind in dem später durch Knicken bzw. Falten montierten Formteil jedoch nicht mehr sichtbar.

Die durch Knicken bzw. Falten und elastische Verformung aus dem erfindungsgemäßen ebenen Flächengebilde erzeugten Formteile sind zunächst nicht eigenstabil, sie behalten ihre Form somit nicht. Erst durch den Einbau im Kraftfahrzeug und Befestigung am Kraftfahrzeug-Innenraum erreichen sie ihre gewünschte dreidimensionale Kontur dauerhaft. Nach einer bevorzugte Ausführungsform der Erfindung weisen die erfindungsgemäßen Flächengebilde bzw. die daraus hergestellten Formteile zur Befestigung im Randbereich überstehende Laschen o. dgl. auf, die von angrenzenden eigensteifen Verkleidungsteilen, z. B. Spritzgussteilen, jeweils überdeckt und damit fixiert werden. Diese Laschen sind somit im eingebauten Zustand nicht mehr sichtbar. Ggf. müssen zur ausreichenden Befestigung zusätzliche Klipsteile, punktweise Verklebungen o. dgl. vorgesehen werden.

Die erfindungsgemäßen Flächengebilde bzw. die daraus hergestellten Formteile weisen ein - im Verhältnis zu bekannten thermoplastisch verformten Formteilen - erheblich geringeres Flächengewicht bei ausreichenden Gebrauchseigenschaften auf. Auch sind die Herstellkosten wesentlich geringer. Ein weiterer Vorteil ist, dass die erfindungsgemäßen Flächengebilde vor dem Falten vollkommen eben sind, sodass Transportkosten eingespart werden. Schließlich sind die Kosten für Stanzwerkzeuge erheblich geringer als die Kosten für Formwerkzeuge für eine thermoplastischer Verformung, wie sie im Stand der Technik notwendig war.

Soweit - wie bevorzugt - sowohl für den Polyolefinschaumstoff als auch für das textile Flächengebilde Polyolefin-Werkstoffe verwendet werden, ergibt sich eine hervorragende Recyclingfähigkeit, da das ganze Produkt ohne vorherige Trennung der beiden Schichten recycelt werden kann.

### Kurze Beschreibung der Zeichnung

Die Erfindung wird nachfolgend anhand eines Ausführungsbeispiels und der Zeichnung näher erläutert. Es zeigen dabei
- Fig. 1: ein als ebenes Stanzteil ausgebildetes erfindungsgemäßes Flächengebilde
- Fig. 2: dass zu einem Formteil verformte Stanzteil

### Bester Weg zur Ausführung der Erfindung

Zur Herstellung einer seitlichen Abdeckung in einem Kofferraum eines Kraftfahrzeuges wird zunächst eine endlose Bahn aus vernetztem Polyethylenschaumstoff 4 einer Rohdichte von 100 kg/m³ und einer Dicke von 3 mm (TROCELLEN^{®}10003, Hersteller: Trocellen GmbH) mit einem genadelten Vlies 3 aus Polypropylenfasern mit einem Flächengewicht von 210 g/m² durch dem Fachmann geläufiges Flammkaschieren haftfest verbunden. Dieses Halbzeug kann anschließend auf Rollen zu Weiterverarbeitung transportiert werden.

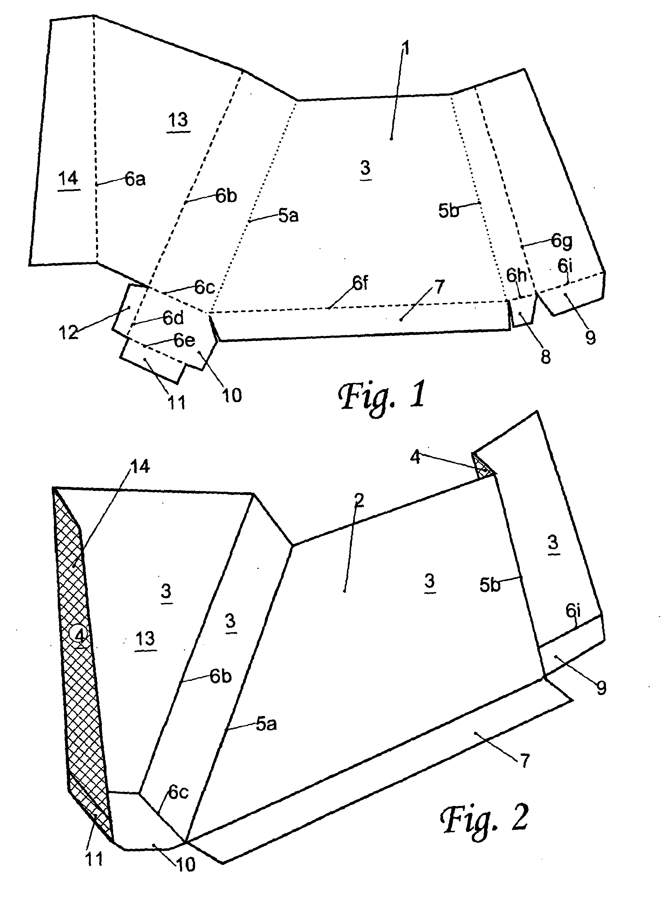

Aus diesem zweischichtigen Rollenmaterial werden zunächst ebene Abschnitte und aus diesen ebene Stanzteile 1, wie in Fig. 1 dargestellt, ausgestanzt. Wie in Fig. 1 weiter zu erkennen ist, weist das ebene Stanzteil 1 eine komplexe Außenkontur auf, um eine optimale Anpassung des später aus diesem Stanzteil 1 geformten Formteils 2 an die Innenkontur des Kofferraumes zu ermöglichen. An den Stellen, an denen das ebene Stanzteil 1 später nach innen - in Fig. 1 somit aus der Zeichenebene nach vorne - geknickt werden soll - negative Krümmung mit einem Winkel < 180°-, werden linienförmig Reihen von eng nebeneinanderliegenden länglichen Stanzungen 6a - 6i eingestanzt, während an den Stellen, entlang derer das Stanzteil positiv, also in Fig. 1 in die Zeichenebene hinein geknickt werden soll, entsprechende linienförmig angeordnete Nadelungen 5a, 5b vorgesehen sind.

Das ebene Stanzteil 1 weist, wie in Fig. 1 dargestellt, mehrere Laschen 7, 8, 9, 10 auf, die zur Befestigung des Formteils 2 am Kraftfahrzeug dienen. Die Laschen 7 - 10 werden hierzu von angrenzenden starren Auskleidungsteilen aus Spritzgussmaterial abgedeckt und zusammen mit diesen am Kraftfahrzeug-Inneren befestigt. Hierdurch erhält das Formteil seine endgültige, durch elastische Verformung der Fahrzeugkontur angepasste, zum Teil auch gewölbte Form (in Fig. 2 nicht dargestellt). Die Laschen 11 und 12 werden nach dem Knicken des Stanzteils 1 entlang der linienförmig angeordneten Stanzungen 6d und 6e von außen an den Bereichen 13 bzw. 14 des Formteils 2 befestigt.

### Legende

- 1.: ebenes Stanzteil
- 2.: Formteil
- 3.: Vlies
- 4.: PE-Schaumstoff
- 5a,5b: Nadelungen
- 6a-6i: Stanzungen
- 7.: Lasche
- 8.: Lasche
- 9.: Lasche
- 10.: Lasche
- 11.: Lasche
- 12.: Lasche
- 13.: Teilbereich
- 14.: Teilbereich
jeweils von der textilen Oberflächenseite her gesehen:
negative Knickung = Winkelgröße < 180° = Innenkante => Stanzung
positive Knickung = Winkelgröße > 180° = Außenkante => Nadelung

## Patentansprüche

1. Flächengebilde zur Auskleidung von Teilbereichen eines Kraftfahrzeug-Innenraumes mit dreidimensional gestalteter Oberflächenkontur, umfassend
- eine Schicht aus Polyolefinschaumstoff (4),
- eine Schicht aus einem textilen Flächengebilde,
**dadurch gekennzeichnet, dass** das Flächengebilde
- eine im wesentlichen ebene Form und
- linienförmig angeordnete Durchbrechungen in Form von Lochungen, Nadelungen (5a,5b) und/oder Stanzungen (6a-6i)
aufweist.

2. Flächengebilde nach Anspruch 1, **dadurch gekennzeichnet, dass** die linienförmig angeordneten Durchbrechungen in Bereichen, die einer positiven Oberflächenkrümmung des zu verkleidenden Kraftfahrzeug-Innenraumes entsprechen, in Form von nebeneinanderliegenden Nadelungen (5a,5b) oder punktförmigen Lochungen und in Bereichen, die einer negativ gekrümmten Oberflächenkontur des zu verkleidenden Kraftfahrzeug-Innenraumes entsprechen, in Form von nebeneinander liegenden länglichen Stanzungen (6a-6i) oder Lochungen ausgeführt sind.

3. Flächengebilde nach einem der Ansprüche 1 oder 2, **dadurch gekennzeichnet, dass** die Schicht aus Polyolefinschaumstoff (4) aus vernetztem, geschlossenzelligem Polyethylenschaumstoff einer Dichte von 30 bis 250 kg/m³, bevorzugt 80 bis 130 kg/m³ besteht.

4. Flächengebilde nach einem der Ansprüche 1 bis 3, **dadurch gekennzeichnet, dass** die Schicht aus textilem Flächengebilde als Vlies (3) aus Polyolefinfasern oder - fäden ausgebildet ist.

5. Flächengebilde nach Anspruch 4, **dadurch gekennzeichnet, dass** das Vlies (3) ein Flächengewicht von 150 bis 350 g/m² aufweist.

6. Flächengebilde nach einem der Ansprüche 1 bis 5, **dadurch gekennzeichnet, dass** die Schicht aus Polyolefinschaumstoff (4) der Fahrzeugkarosserie und die Schicht aus einem textilen Flächengebilde dem Fahrzeuginneren zugewandt ist.

7. Aus einem ebenen Flächengebilde nach einem der Ansprüche 1 bis 6 durch Falten, Knicken und/oder Biegen montiertes Formteil (2) zur Auskleidung von Teilbereichen eines Kraftfahrzeug-Innenraumes mit dreidimensional gestalteter Oberflächenkontur.

8. Verfahren zur Auskleidung von Teilbereichen eines Kraftfahrzeug-Innenraumes mit dreidimensional gestalteter Oberflächenkontur, **dadurch gekennzeichnet, dass** ein zunächst im Wesentlichen ebenes, linienförmig angeordnete Durchbrechungen in Form von Lochungen, Nadelungen (5a,5b) oder Stanzungen (6a-6i) aufweisendes Flächengebilde, umfassend
- eine Schicht aus Polyolefinschaumstoff (4) und
- eine Schicht aus einem textilen Flächengebilde,
durch Knicken bzw. Falten entlang der linienförmigen Durchbrechungen sowie durch elastische Verformung wenigstens weitgehend an die räumliche Gestalt des zu verkleidenden Teilbereiches eines Kraftfahrzeug-Innenraumes angepasst und direkt oder indirekt an diesem befestigt wird.

9. Verfahren nach Anspruch 8, **dadurch gekennzeichnet, dass** ein linienförmig angeordnete Durchbrechungen in Form von Nadelungen (5a,5b) und linienförmig angeordnete Durchbrechungen in Form von länglichen Stanzungen (6a-6i) aufweisendes Flächengebilde im Bereich der Nadelungen (5a,5b) - von der Textilseite gesehen - positiv und im Bereich von länglichen Stanzungen (6a-6i) negativ geknickt bzw. gefaltet wird.

## Claims

1. Sheet-like structure for the lining of part-regions of a motor vehicle interior with a three-dimensionally configured surface contour, comprising
- a layer consisting of polyolefin foam (4),
- a layer consisting of a sheet-like textile structure,
**characterized in that** the sheet-like structure has
- an essentially planar shape and
- linearly arranged perforations in the form of holings, needlings (5a, 5b) and/or punchings (6a-6i).

2. Sheet-like structure according to Claim 1, **characterized in that** the linearly arranged perforations are executed, in regions which correspond to a positive surface curvature of the motor vehicle interior to be lined, in the form of needlings (5a, 5b) or punctiform holings lying next to one another and, in regions which correspond to a negatively curved surface contour of the motor vehicle interior to be lined, in the form of elongate punchings (6a-6i) or holings lying next to one another.

3. Sheet-like structure according to either one of Claims 1 and 2, **characterized in that** the layer consisting of polyolefin foam (4) is composed of crosslinked closed-cell polyethylene foam having a density of 30 to 250 kg/m³, preferably of 80 to 130 kg/m³.

4. Sheet-like structure according to one of Claims 1 to 3, **characterized in that** the layer of sheet-like textile structure is formed as a nonwoven (3) consisting of polyolefin fibres or polyolefin threads.

5. Sheet-like structure according to Claim 4, **characterized in that** the nonwoven (3) has a weight per unit area of 150 to 350 g/m².

6. Sheet-like structure according to one of Claims 1 to 5, **characterized in that** the layer consisting of polyolefin foam (4) faces the vehicle body and the layer consisting of a sheet-like textile structure faces the inside of the vehicle.

7. Shaped part (2), obtained from a planar sheet-like structure according to one of Claims 1 to 6 by folding, buckling and/or bending, for the lining of part-regions of a motor vehicle interior with a three-dimensionally configured surface contour.

8. Method for the lining of part-regions of a motor vehicle interior with a three-dimensionally configured surface contour, **characterized in that** an initially essentially planar sheet-like structure having linearly arranged perforations in the form of holings, needlings (5a, 5b) or punchings (6a-6i) and comprising
- a layer consisting of polyolefin foam (4) and
- a layer consisting of a sheet-like textile structure
is adapted by buckling or folding along the linear perforations and by elastic deformation, at least essentially to the spatial configuration of the part-region, to be lined, of a motor vehicle interior and is fastened directly or indirectly to this part-region.

9. Method according to Claim 8, **characterized in that** a sheet-like structure having linearly arranged perforations in the form of needlings (5a, 5b) and linearly arranged perforations in the form of elongate punchings (6a-6i) is buckled or folded positively, as seen from the textile side, in the region of the needlings (5a, 5b) and negatively in the region of elongate punchings (6a-6i).

## Revendications

1. Structure plane pour l'habillage de zones partielles d'un habitacle d'un véhicule automobile, avec un contour superficiel conçu sous forme tridimensionnelle, comprenant
- une couche en mousse de polyoléfine (4),
- une couche en une structure plane textile,
**caractérisée en ce que** la structure plane présente
- une forme sensiblement plate et
- des jours disposés en ligne sous forme de perçages, d'aiguilletages (5a, 5b) et/ou de poinçonnages (6a-6i).

2. Structure plane selon la revendication 1, **caractérisée en ce que**, dans des zones qui correspondent à une courbure positive de la surface de l'habitacle de véhicule automobile qui doit être habillé, les jours disposés en ligne sont réalisés sous la forme d'aiguilletages (5a, 5b) placés côte à côte ou de perçages en forme de points et dans des zones qui correspondent à un contour de surface à courbure négative de l'habitacle de véhicule automobile qui doit être habillé, ils sont réalisés sous la forme de poinçonnages allongés (6a - 6i) situés côte à côte ou de perçages.

3. Structure plane selon l'une quelconque des revendications 1 ou 2, **caractérisée en ce que** la couche en mousse de polyoléfine (4) consiste en une mousse de polyéthylène réticulée, à alvéoles fermées, d'une densité de 30 à 250 kg/m³, de préférence de 80 à 130 kg/m³.

4. Structure plane selon l'une quelconque des revendications 1 à 3, **caractérisée en ce que** la couche en structure plane textile est réalisée sous la forme d'un non-tissé (3) en fibres ou en fils de polyoléfine.

5. Structure plane selon la revendication 4, **caractérisée en ce que** le non-tissé (3) présente un grammage de 150 à 350 g/m².

6. Structure plane selon l'une quelconque des revendications 1 à 5, **caractérisée en ce que** la couche en mousse de polyoléfine (4) fait face à la carrosserie du véhicule et la couche en une structure textile plane fait face à l'habitacle du véhicule.

7. Pièce moulée (2) montée à partir d'une structure plane selon l'une quelconque des revendications 1 à 6, par pliage, flambage et/ou cintrage pour l'habillage de zones partielles d'un habitacle d'un véhicule automobile avec un contour superficiel conçu sous forme tridimensionnelle.

8. Procédé d'habillage de zones partielles d'un habitacle d'un véhicule automobile avec un contour superficiel conçu sous forme tridimensionnelle, **caractérisé en ce qu'**on adapte au moins largement à la conformation spatiale de la zone partielle à habiller d'un habitacle de véhicule automobile par flambage ou par pliage le long des jours en forme de lignes ainsi que par déformation élastique une structure plane tout d'abord sensiblement plate, comportant des jours disposés en ligne sous forme de perçages, d'aiguilletages (5a, 5b) ou de poinçonnages (6a-6i) comprenant
- une couche en mousse de polyoléfine (4) et
- une couche en une structure plane textile,
et **en ce qu'**on la fixe directement ou indirectement à l'habitacle du véhicule automobile.

9. Procédé selon la revendication 8, **caractérisé en ce que** dans la zone des aiguilletages (5a, 5b) on flambe ou on plie de façon positive (vue côté textile) et de façon négative dans la zone de poinçonnages allongés (6a-6i) une structure plane comportant des jours disposés en ligne sous la forme d'aiguilletages (5a, 5b) et des jours disposés en ligne sous la forme de poinçonnages allongés (6a-6i).
